# EUROPÄISCHE PATENTANMELDUNG

(11) **EP 1 293 708 A2**
(43) Veröffentlichungstag der Anmeldung: **19.03.2003**
(21) Anmeldenummer: 02018053.5
(22) Anmeldetag: 13.08.2002
(51) Int. Cl.: F16H 61/04, F16H 63/08

(54) **Getriebe bzw. Verfahren zur Steuerung eines Getriebes für ein Kraftfahrzeug**

(30) Priorität: 18.09.2001 DE 10145918
(71) Anmelder: Volkswagen Aktiengesellschaft, 38436 Wolfsburg (DE)
(72) Erfinder: Adomeit, Carsten Dr., 30173 Hannover (DE); Hofmann, Rainer, 38106 Braunschweig (DE)

(57) **Zusammenfassung**

Die Erfindung betrifft ein Getriebe bzw. ein Verfahren zur Steuerung eines Getriebes für ein Kraftfahrzeug, insbesondere ein automatisiertes Schaltgetriebe, mit mehreren einlegbaren und herausnehmbaren Gangstufen (1-8) zur Realisierung von Gangwechseln, wobei das Einlegen und Herausnehmen der Gangstufen (1-8) mit Hilfe von Kopplungseinheiten, insbesondere mit Hilfe von ein- und ausrückbaren Schiebemuffen, realisierbar ist und wobei die Kopplungseinheiten über vorgesehene Schaltschienen (a-e) und über jeweilige Aktuatoren ansteuerbar sind, wobei bestimmte Gangstufen (1-8) bestimmten Schaltschienen (a-e) zugeordnet sind.

Die Schaltzeiten sind dadurch verringert und eine kompakte Bauweise des Getriebes ist dadurch erreicht, daß mehrere Gangstufen (1-8) derart zumindest zwei unterschiedlichen Schaltschienen zugeordnet sind, daß die jeweils aufeinanderfolgenden Gangstufen (1-8) verschiedenen Schaltschienen (a-e) zugeordnet sind, so daß bei einem sequentiellen Gangwechsel die jeweiligen Schaltschienen (a-e) zumindest teilweise gleichzeitig ansteuerbar sind.

## Beschreibung

Die Erfindung betrifft ein Getriebe für ein Kraftfahrzeug, insbesondere ein automatisiertes Schaltgetriebe, mit mehreren einlegbaren und herausnehmbaren Gangstufen zur Realisierung von Gangwechseln, wobei das Einlegen und Herausnehmen der Gangstufen mit Hilfe von Kopplungseinheiten, insbesondere mit Hilfe von ein- und ausrückbaren Schiebemuffen, realisierbar ist, wobei die Kopplungseinheiten über vorgesehene Schaltschienen und über jeweilige Aktuaktoren ansteuerbar sind und wobei bestimmte Gangstufen bestimmten Schaltschienen zugeordnet sind. Weiterhin betrifft die Erfindung ein Verfahren zur Steuerung des eingangs genannten Getriebes, wobei im Getriebe mehrere Gangstufen zur Realisierung von Gangwechseln eingelegt und/oder herausgenommen werden, wobei das Einlegen und Herausnehmen der Gangstufen mit Hilfe von Kopplungseinheiten, insbesondere mit Hilfe von ein- und ausrückbaren Schiebemuffen, realisiert wird, wobei die Kopplungseinheiten über vorgesehene Schaltschienen und über jeweilige Aktuaktoren angesteuert werden und wobei bestimmte Gangstufen bestimmten Schaltschienen zugeordnet sind.

Im Stand der Technik sind Getriebe bzw. Verfahren für die Steuerung von Getrieben für Kraftfahrzeuge bekannt, bei denen die Getriebe eine bestimmte Anzahl von Schaltschienen aufweisen. Die Schaltschienen sind hier funktional wirksam zwischen den jeweiligen Kopplungseinheiten und den jeweiligen Aktuaktoren angeordnet. Anders ausgedrückt, eine Kopplungseinheit, die vorzugsweise als ein- und ausrückbare Schiebemuffe ausgeführt ist, und mit deren Hilfe die jeweilige Gangstufe innerhalb des Getriebes einlegbar bzw. herausnehmbar ist, wird über die Schaltschiene, die innerhalb des Getriebes bewegbar angeordnet ist, mit Hilfe des jeweiligen Aktuaktors betätigt, woraufhin dann die jeweilige Gangstufe entweder eingelegt bzw. herausgenommen wird. Hierbei sind im Stand der Technik bisher bestimmte Gangstufen bestimmten Schaltschienen zugeordnet. So ist die erste und zweite Gangstufe einer ersten Schaltschiene, die dritte und vierte Gangstufe einer zweiten Schaltschiene und die fünfte und sechste Gangstufe einer dritten Schaltschiene zugeordnet. Anders ausgedrückt, mit Hilfe der ersten, zweiten bzw. dritten Schaltschiene sind die jeweiligen sequentiellen Gangwechsel zwischen dem ersten und zweiten, dem dritten und dem vierten Gang etc. realisierbar, indem jeweils nur eine Schaltschiene entsprechend angesteuert wird bzw. bewegt wird.

Im Stand der Technik ist weiterhin eine Vorrichtung bzw. ein Verfahren bekannt (DE 199 12 817 A1), bei der bzw. bei dem zur Verringerung von Schaltzeiten bei Gangwechseln innerhalb des Getriebes mehrere voneinander getrennte Kopplungseinheiten vorgesehen sind. Anders ausgedrückt, diese innerhalb des Getriebes vorgesehenen separaten Kopplungseinheiten, die jeweils einzeln durch wiederum vorgesehenen separate Aktuaktoren vorzugsweise mit Hilfe von Seilzügen, ansteuerbar sind, realisieren die einzelnen Gangwechsel innerhalb des Getriebes in relativ kurzer Zeit, da bspw. bei sequentiellen Gangwechseln, also bspw. beim Schalten vom ersten in den zweiten Gang jeweils zwei Aktuaktoren bzw. zwei Kopplungseinheiten gleichzeitig angesteuert werden, um den entsprechenden Gangwechsel zu realisieren, so daß die Schaltzeiten hier entsprechend verringert sind.

Bei den bisherigen im Stand der Technik bekannten Vorrichtungen bzw. Verfahren, also bei den bisher bekannten Getrieben, ist deren Steuerungstechnik sehr komplex aufgebaut und daher nicht nur störanfällig, sondern es ist ein entsprechend großer Raumbedarf beim Bau des Getriebes notwendig, um dies entsprechend realisieren zu können. Entweder ist die Steuerungstechnik zur Verringerung der Schaltzeiten bei den bekannten Getrieben sehr teuer und auch störanfällig, wobei die Getriebe hier nicht kompakt gebaut werden können, oder die bekannten Getriebe können zwar kompakt und ohne aufwendige Steuerungstechnik gebaut werden, weisen dann aber relativ hohe Schaltzeiten bei einem Gangwechsel von sequentiell hintereinander angeordneter Gangstufen auf.

Der Erfindung liegt daher die Aufgabe zugrunde, das eingangs genannte Getriebe bzw. das eingangs genannte Verfahren derart auszugestalten und weiterzubilden, daß die Schaltzeiten die bei einem Gangwechsel verringert sind, ohne daß eine kostenintensive, störanfällige Steuerungstechnik notwendig ist und dennoch eine kompakte Bauweise des Getriebes ermöglicht ist.

Die zuvor aufgezeigte Aufgabe ist nun - für das Getriebe - dadurch gelöst, daß mehrere Gangstufen derart zumindest zwei unterschiedlichen Schaltschienen zugeordnet sind, daß die jeweils aufeinanderfolgenden Gangstufen verschiedenen Schaltschienen zugeordnet sind, so daß bei einem sequentiellen Gangwechsel die jeweiligen Schaltschienen zumindest teilweise gleichzeitig ansteuerbar sind.

Die zuvor aufgezeigte Aufgabe ist nun - für das Verfahren - dadurch gelöst, daß mehrere Gangstufen derart zumindest zwei unterschiedlichen Schaltschienen zugeordnet sind, daß die jeweils aufeinanderfolgenden Gangstufen verschiedenen Schaltschienen zugeordnet sind, so daß bei einem sequentiellen Gangwechsel die jeweiligen Schaltschienen zumindest teilweise gleichzeitig angesteuert werden.

Der Erfindung liegt grundsätzlich das Prinzip zugrunde, daß bei einem Getriebe mit entsprechend vorgesehenen Schaltschienen die jeweiligen Gangstufen den bestimmten unterschiedlichen Schaltschienen auf bestimmte Art und Weise zugeordnet werden, nämlich so, daß die sequentiell hintereinanderliegenden Gangstufen auf verschiedenen, nämlich unterschiedlichen Schaltschienen liegen. Dies ermöglicht eine teilweise gleichzeitige Ansteuerung der unterschiedlichen Schaltschienen, auf denen jeweils die hintereinanderliegenden Gangstufen angeordnet sind, wobei aufgrund der gleichzeitigen teilweisen Ansteuerung dieser unterschiedlichen Schaltschienen die entsprechende Schaltzeit zur Realisierung des Gangwechsels entsprechend gering gehalten werden kann. Im Ergebnis können hierdurch kurze Schaltzeiten realisiert werden, wobei die Anzahl der Schaltschienen im Getriebe sowie auch die Steuerungstechnik nunmehr eben nicht mit damit verbundenen Kosten erhöht werden muss, wodurch die eingangs genannten Nachteile vermieden sind.

Es gibt nun eine Vielzahl von Möglichkeiten, das erfindungsgemäße Getriebe bzw. das erfindungsgemäße Verfahren in vorteilhafter Art und Weise auszugestalten und weiterzubilden. Hierfür darf zunächst auf die dem Patentanspruch 1 bzw. dem Patentanspruch 6 nachgeordneten Patentansprüche verwiesen werden. Im folgenden soll nun ein bevorzugtes Ausführungsbeispiel der Erfindung anhand der folgenden Zeichnung sowie Beschreibung näher erläutert werden. In der Zeichnung zeigt:
- Fig. 1: in einer schematischen Darstellung das bisher im Stand der Technik bekannte Schaltschienen- Prinzip,
- Fig. 2: den bisherigen im Stand der Technik bekannten Schaltablauf gemäß dem in Fig. 1 dargestellten Schaltschienen-Prinzip,
- Fig. 3: das erfindungsgemäße Schaltschienen-Prinzip in schematischer Darstellung und
- Fig. 4: der Schaltablauf gemäß dem in Fig. 3 gezeigten erfindungsgemäßen Schaltschienen-Prinzip in schematischer Darstellung.

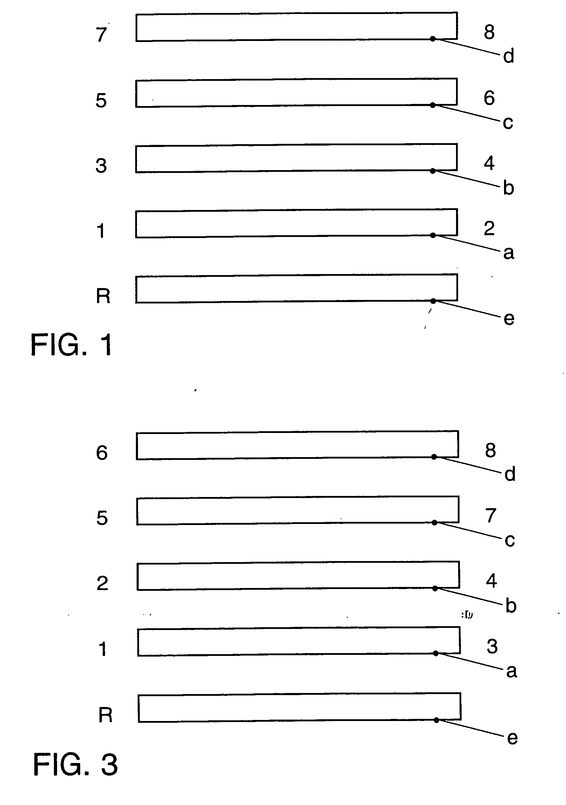

Die Fig. 1 bis 4 sind schematische Darstellungen und sollen die Schaltabläufe innerhalb eines hier nicht dargestellten Getriebes für ein Kraftfahrzeug darstellen. Hierbei wird grundsätzlich vorausgesetzt, daß das Getriebe Schaltschienen aufweist, die im wesentlichen innerhalb des Getriebes bewegbar angeordnet sind. Weiterhin sind innerhalb des Getriebes die an sich in üblicherweise bekannter Kopplungseinheiten vorgesehen, um die entsprechenden Gangwechsel zu realisieren. Die Kopplungseinheiten sind vorzugsweise als ein- und ausrückbare Schiebemuffen ausgeführt, die mit Hilfe der Schaltschienen betätigbar sind. Jede einzelne Schaltschiene wird von einem entsprechenden Aktuaktor angesteuert, d. h. entsprechend bewegt bzw. verschoben. Die die Schaltschienen ansteuernden Aktuaktoren können auf unterschiedliche Art und Weise realisiert sein. Denkbar sind elektrisch ausgeführte Aktuaktoren und/oder auch hydraulisch ausgeführte Aktuaktoren. Dies ist abhängig vom jeweiligen Getriebe- und/oder Kraftfahrzeugtyp. Vorzugsweise ist das Getriebe als automatisiertes Schaltgetriebe ausgeführt, es kommen aber auch andere Getriebeformen, insbesondere automatische Getriebe in Frage. Das hier geschilderte erfindungsgemäße Schaltschienen-Prinzip ist daher nicht auf ein automatisiertes Schaltgetriebe beschränkt.

Weiterhin sind die üblichen Komponenten für das zu realisierende, hier nicht im einzelnen dargestellte Steuerungsschema bzw. Steuersystem vorgesehen. Insbesondere weist das Steuersystem ein Steuergerät auf, daß auf elektronischer und/oder elektrischer Basis realisiert ist. Das Steuergerät ermittelt, insbesondere bei einem automatischen Schaltgetriebe, bspw. die Fahrzeuggeschwindigkeit des Kraftfahrzeugs Motorsteuerparameter bzw. die zur Steuerung der Getriebeabläufe, also der im Getriebe zu realisierenden Gangwechsel entsprechenden notwendigen Steuerparameter. Über vorgesehene Steuerleitungen, steuert das Steuergerät dann die entsprechenden einzelnen Aktuaktoren zur Realisierung der Gangwechsel bzw. des Einlegens und Herausnehmens der jeweiligen Gangstufe an. Dies alles ist im wesentlichen bekannt und bedarf daher keiner weiteren ausführlichen Erläuterung.

Die Fig. 1 zeigt nun das bisher im Stand der Technik bekannte Schaltschienen-Prinzip. Dargestellt sind hier insgesamt fünf Schaltschienen a bis e in einer schematischen Darstellung. Jeder der hier dargestellten Schaltschienen a bis e ist jeweils ein hier nicht dargestellter Aktuaktor zugeordnet, durch den die jeweilige Schaltschiene a bis e entsprechend ansteuerbar bzw. bewegbar ist. Weiterhin ist jede Schaltschiene a bis e innerhalb des Getriebes mit einer entsprechenden Kopplungseinheit, vorzugsweise mit einer ein- und ausrückbaren Schiebemuffe entsprechend wirksam verbunden. Entscheidend ist nun, daß bisher im Stand der Technik, sowie dies durch die Fig.1 dargestellt ist, der ersten Schaltschiene a jeweils die erste Gangstufe 1 und die zweite Gangstufe 2 zugeordnet sind, der zweiten Schaltschiene b die dritte Gangstufe 3 und die vierte Gangstufe 4, sowie der dritten Schaltschiene c die fünfte Gangstufe 5 zugeordnet ist sowie der fünften Schaltschiene e der Rückwärtsgang R zugeordnet ist.

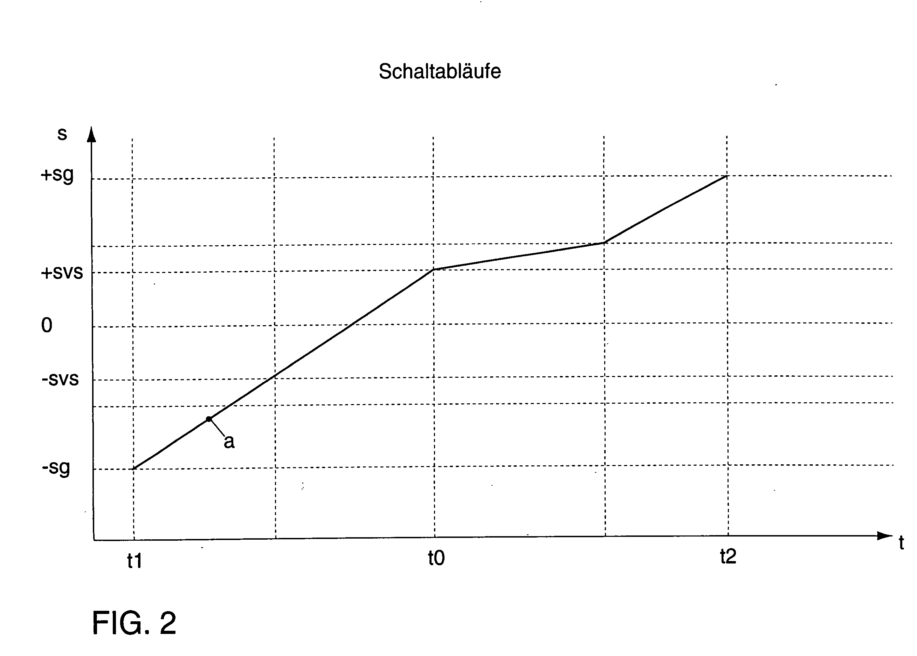

Im folgenden soll nun der Schaltablauf für die Anordnung bzw. Zuordnung- der Schaltschienen bzw. Gangstufen gemäß Fig. 1 anhand der Fig. 2 näher erläutert werden: Bei einem Gangwechsel von der ersten Gangstufe 1 zur zweiten Gangstufe 2 führt die Schaltschiene a gemäß dem in Fig. 2 dargestellten Diagramm die folgende Bewegung aus. Zunächst wird die erste Gangstufe 1 herausgenommen. Die Bewegung der Schaltschiene a startet im Zeitpunkt t1. Die Schaltschiene a fährt nun in ihre Neutralposition, d. h. überfährt diese nämlich bis zum Zeitpunkt t0, wo die Vorsynchronisation der zweiten Gangstufe 2 beginnt. Erst wenn die zweite Gangstufe 2 entsprechend synchronisiert ist, wird die zweite Gangstufe 2 eingelegt. Aus dem in Fig. 2 dargestellten Diagramm ergibt sich eine entsprechende Schaltzeit ts zwischen den Zeitpunkten t1 und t2, folglich gilt Schaltzeit ts =(t2-t1).

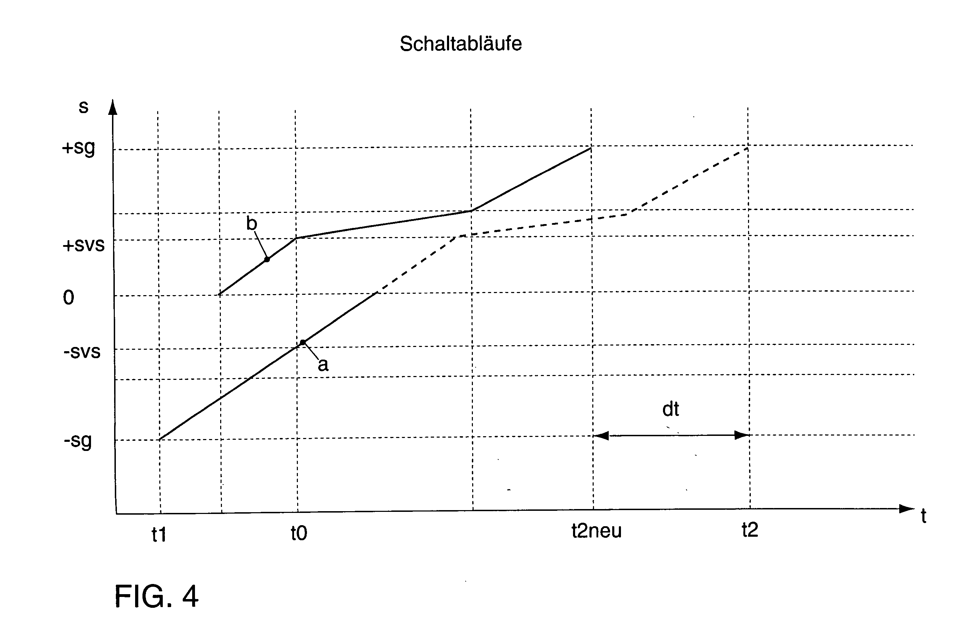

Die bisherigen im Stand der Technik bekannten Nachteile sind nun durch das erfindungsgemäße Schaltschienen-Prinzip, daß in Fig. 3 dargestellt ist vermieden. Grundsätzlich gilt nun, daß mehrere Gangstufen derart zumindest zwei unterschiedlichen Schaltschienen zugeordnet sind, daß die jeweils aufeinanderfolgenden Gangstufen verschiedenen Schaltschienen zugeordnet sind, so daß bei einem sequentiellen Gangwechsel die jeweiligen Schaltschienen zumindest teilweise gleichzeitig ansteuerbar sind. Hierbei müssen nicht unbedingt alle Vorwärts-Gangstufen, die sequentiell hintereinander liegen unterschiedlichen Schaltschienen zugeordnet sein. Es können bspw. auch nur mehrere, bspw. nur die ersten vier Gangstufen den unterschiedlichen Schaltschienen entsprechend zugeordnet sein.

Wie nun aus Fig. 3 ersichtlich ist, sind hier ebenfalls - ähnlich wie Fig. 1 - fünf Schaltschienen a bis e vorgesehen. Allerdings ist die Zuordnung der Gangstufen 1 bis 8 bzw. R zu diesen Schaltschienen a bis e auf andere Art und Weise verwirklicht. Gemäß der Erfindung sind der ersten Schaltschiene a die erste Gangstufe 1 und die dritte Gangstufe 3, der zweiten Schaltschiene b die zweite Gangstufe 2 und die vierte Gangstufe 4 und der dritten Schaltschiene c die fünfte Gangstufe 5 sowie die siebte Gangstufe 7 zugeordnet. Die Darstellung in den Fig. 1 und 3 zeigt hier insgesamt acht Gangstufen, so daß die vierte Schaltschiene d - gemäß Fig. 3 - der sechsten Gangstufe 6 und der achten Gangstufe 8 zugeordnet ist, aber gemäß Fig.1 der vierten Schaltschiene d die siebte Gangstufe 7 und die achte Gangstufe 8 zugeordnet sind. Wie die Fig. 3 weiter erkennen lässt, ist der Rückwärtsgang R der fünften Schaltschiene e in Alleinstellung zugeordnet. Im Ergebnis sind daher zumindest teilweise mehrere Vorwärtsgangstufen jeweils immer auf unterschiedlichen Schaltschienen a bis e angeordnet bzw. zugeordnet, so daß bei einem sequentiellen Gangwechsel, hier von Gangstufe 1 zur Gangstufe 2 bzw. von Gangstufe 2 zur Gangstufe 3 oder auch von Gangstufe 4 zur Gangstufe 5 etc. immer die jeweiligen unterschiedlichen Schaltschienen zumindest teilweise gleichzeitig ansteuerbar sind. Dies verringert die Schaltzeiten für einen Gangwechsel dadurch, daß sich die einzelnen Bewegungsphasen der unterschiedlichen Schaltschienen überlappen können, so daß die Gesamtschaltzeit verkürzt wird. Hierdurch verkürzt sich ebenfalls die Phase der Zugkraftunterbrechung während des Schaltvorgangs, die sich bei Lastschaltungen als Verbesserung des Schaltkomforts bemerkbar macht. Es sei an dieser Stelle nochmals darauf hingewiesen, daß die zeitgleiche Bewegung der unterschiedlichen Schaltschienen aufgrund der jeweils einzeln ansteuerbaren, den Schaltschienen zugeordneten Aktuaktoren realisiert ist, die Schaltschienen hier also nicht, wie bisher im Stand der Technik üblich, durch eine zentrale Schaltwelle angesteuert werden. Daher ist es notwendig, mechanisch und/oder elektronisch dafür Sorge zu tragen, daß wenn zwei unterschiedliche Schaltschienen (bspw. die Schaltschienen a und b) in Bewegung sind, nicht gleichzeitig auch zwei Gänge eingelegt werden können, da sonst das Getriebe zerstört werden könnte. Eine gleichzeitige Synchronisationsphase beider Gangstufen ist ebenfalls zu vermeiden, da sich sonst ein erhöhter Verschleiß der Synchronisationseinrichtungen einstellen würde.

Fig. 4 zeigt nun den Schaltablauf der erfindungsgemäßen Schaltschienen-Anordnung gemäß der Fig. 3. Bei einer Schaltung zwischen zwei Gangstufen, also bei einem Gangwechsel mit unterschiedlichen Schaltschienen lassen sich Teile der Bewegungen der Schaltschienen parallelisieren. Gemäß dem in Fig. 4 dargestellten Diagramm ist hier bspw. ein Gangwechsel von der Gangstufe 1 in die Gangstufe 2 dargestellt. Hierbei wird zunächst die erste Gangstufe 1 herausgenommen, also die erste Schaltschiene a entsprechend bewegt, wobei die Bewegung beim Zeitpunkt t1 beginnt. Parallel wird ab einem bestimmten Zeitpunkt die zweite Schaltschiene b auf den Beginn der Vorchronosisation gefahren, wobei die erste Schaltschiene a auf der Neutralposition "0" stoppt. Parallel wird die zweite Gangstufe 2 entsprechend synchronisiert und die zweite Gangstufe 2 im Zeitpunkt t2neu eingelegt. Die Schaltzeit für diesen gemäß dem erfindungsgemäßen Verfahren mit Hilfe des erfindungsgemäßen Getriebes realisierten Schaltablauf beträgt nun den Zeitraum zwischen den Zeitpunkten t2neu und t1. Verglichen mit Fig. 2 gilt daher, daß die neue Schaltzeit ts = (t2neu - t1) ist, wobei (t2neu - t1) < (t2 - t1). Es ergibt sich daher eine Einsparung einer Schaltzeit von dt, dargestellt in Fig. 4.

Der Erfindung liegt daher grundsätzlich das Prinzip zugrunde, daß Schaltbewegungen von unterschiedlichen Schaltschienen parallel für sequentielle Gangwechsel ermöglicht ist. Dies wird insbesondere durch die Änderung der jeweiligen Gangzuordnung, d. h. Zuordnung der Gangstufen zu den einzelnen Schaltschienen erreicht. Für die Anordnung, wie in Fig. 3 dargestellt, können alle sequentiellen Gangwechsel, d. h. die Gangwechsel von R zur ersten Gangstufe 1., von der ersten Gangstufe 1 zur zweiten Gangstufe 2, von der zweiten Gangstufe 2 zur dritten Gangstufe 3, von der dritten Gangstufe 3 zur vierten Gangstufe 4 usw. unter Parallelisierung der Bewegungsabläufe der unterschiedlichen Schaltschienen a bis e erfolgen. Grundsätzlich kann bei der in Fig. 3 dargestellten Anordnung keine Parallelisierung der Bewegungen der einzelnen Schaltschienen a bis e erfolgen, wenn bspw. eine Gangstufe ausgelassen werden soll, anders ausgedrückt eine Gangstufe übersprungen werden soll. Dies scheint im allgemeinen nicht unbedingt notwendig, da eine derartige Schaltung nicht immer unter Volllast erfolgt und damit auch mehr Zeit beanspruchen darf. Es ist aber auch denkbar, daß durch eine entsprechend veränderte Gangstufen-Zuordnung aber auch dieser Schaltungsfall (mit Überspringen einer entsprechenden Gangstufe) mit entsprechenden teilweise zeitgleichen parallelisierten Bewegungsanteilen von unterschiedlichen Schaltschienen realisiert werden kann.

Schließlich ist denkbar, daß Schaltungen, d. h. Gangwechsel, die auch mit einer veränderten Gang-Zuordnung nicht parallelisiert ablaufen können, schneller gemacht werden können, wenn der funktionslose Bereich um die Neutrallage verkleinert wird. Dies führt dazu, daß die zurückzulegende Wegstrecke kürzer wird und bei gleicher Geschwindigkeit entsprechend schneller durchlaufen wird. Hierbei ist allerdings zu achten, daß ein ausreichend großer Bewegungsbereich zwischen den Vorsynchronisationslagen verbleibt, der auch eine sichere Deaktivierung der entsprechenden Gangstufen gewährleistet.

### BEZUGSZEICHENLISTE

- 1: 1.Gangstufe
- 2: 2.Gangstufe
- 3: 3.Gangstufe
- 4: 4.Gangstufe
- 5: 5.Gangstufe
- 6: 6.Gangstufe
- 7: 7.Gangstufe
- 8: 8.Gangstufe
- a: 1.Schaltschiene
- b: 2.Schaltschiene
- c: 3.Schaltschiene
- d: 4.Schaltschiene
- e: 5.Schaltschiene
- R: Rückwärtsgang
- "0": Neutralposition
- t0: Zeitpunkt
- t1: Zeitpunkt
- t2: Zeitpunkt
- t2neu: Zeitpunkt
- t5: Schaltzeit
- dt: Verkürzung Schaltzeit

## Patentansprüche

1. Getriebe für ein Kraftfahrzeug, insbesondere automatisiertes Schaltgetriebe, mit mehreren einlegbaren und herausnehmbaren Gangstufen (1-8) zur Realisierung von Gangwechseln, wobei das Einlegen und Herausnehmen der Gangstufen (1-8) mit Hilfe von Kopplungseinheiten, insbesondere mit Hilfe von ein- und ausrückbaren Schiebemuffen, realisierbar ist, wobei die Kopplungseinheiten über vorgesehene Schaltschienen (a-e) und über jeweilige Aktuatoren ansteuerbar sind, und wobei bestimmte Gangstufen (1-8) bestimmten Schaltschienen (a-e) zugeordnet sind, **dadurch gekennzeichnet, daß** mehrere Gangstufen (1-8) derart zumindest zwei unterschiedlichen Schaltschienen (a-e) zugeordnet sind, daß die jeweils aufeinanderfolgenden Gangstufen (1-8) verschiedenen Schaltschienen (a-e) zugeordnet sind, so daß bei einem sequentiellen Gangwechsel die jeweiligen Schaltschienen (a-e) zumindest teilweise gleichzeitig ansteuerbar sind.

2. Getriebe nach Anspruch 1, **dadurch gekennzeichnet, daß** die erste Schaltschiene (a) durch einen ersten Aktuator ansteuerbar ist und der ersten Schaltschiene (a) die erste und dritte Gangstufe (1, 3) zugeordnet ist.

3. Getriebe nach Anspruch 1 oder 2, **dadurch gekennzeichnet, daß** die zweite Schaltschiene (b) durch einen zweiten Aktuator ansteuerbar ist und der zweiten Schaltschiene (b) die zweite und vierte Gangstufe (2,'4) zugeordnet ist.

4. Getriebe nach einem der vorstehenden Ansprüche, **dadurch gekennzeichnet, daß** die dritte Schaltschiene (c) durch einen dritten Aktuator ansteuerbar ist und der dritten Schaltschiene (c) die fünfte Gangstufe (5) zugeordnet ist.

5. Getriebe nach einem der vorstehenden Ansprüche, **dadurch gekennzeichnet, daß** der dritten Schaltschiene (c) die siebte Gangstufe (7) und der vierten Schaltschiene (d) die sechste und achte Gangstufe (6, 8) zugeordnet ist.

6. Verfahren zur Steuerung eines Getriebe für ein Kraftfahrzeug, insbesondere eines Getriebes nach den Ansprüchen 1 bis 5, wobei im Getriebe mehrere Gangstufen (1-8) zur Realisierung von Gangwechseln eingelegt und/oder herausgenommen werden, wobei das Einlegen und Herausnehmen der Gangstufen (1-8) mit Hilfe von Kopplungseinheiten, insbesondere mit Hilfe von ein- und ausrückbaren Schiebemuffen, realisiert wird, wobei die Kopplungseinheiten über vorgesehene Schaltschienen (a-e) und über jeweilige Aktuatoren angesteuert werden, und wobei bestimmte Gangstufen (1-8) bestimmten Schaltschienen (a-e) zugeordnet sind, **dadurch gekennzeichnet, daß** mehrere Gangstufen (1-8) derart zumindest zwei unterschiedlichen Schaltschienen (a-e) zugeordnet sind, daß die jeweils aufeinanderfolgenden Gangstufen verschiedenen Schaltschienen (a-e) zugeordnet sind, so daß bei einem sequentiellen Gangwechsel die jeweiligen Schaltschienen (a-e) zumindest teilweise gleichzeitig angesteuert werden.

7. Verfahren nach Anspruch 6, **dadurch gekennzeichnet, daß** die erste Schaltschiene (a) durch einen ersten Aktuator angesteuert wird und mit Hilfe der ersten Schaltschiene (a) die erste und dritte Gangstufe (1, 3) eingelegt bzw. herausgenommen wird.

8. Verfahren nach Anspruch 5 oder 6, **dadurch gekennzeichnet, daß** die zweite Schaltschiene (b) durch einen zweiten Aktuator angesteuert wird und mit Hilfe der zweiten Schaltschiene (b) die zweite und vierte Gangstufe (2, 4) eingelegt bzw. herausgenommen wird.

9. Verfahren nach einem der Ansprüche 6 bis 8, **dadurch gekennzeichnet, daß** die dritte Schaltschiene (c) durch einen dritten Aktuator angesteuert wird und mit Hilfe der dritten Schaltschiene (c) die fünfte und siebte Gangstufe (5, 7) eingelegt bzw. herausgenommen wird.

10. Verfahren nach einem der Ansprüche 6 bis 9, **dadurch gekennzeichnet, daß** die vierte Schaltschiene (d) durch einen vierten Aktuator angesteuert wird und mit Hilfe der vierten Schaltschiene (d) die sechste und achte Gangstufe (6, 8) eingelegt bzw. herausgenommen wird.
